# EUROPÄISCHE PATENTSCHRIFT

(11) **EP 2 974 937 B1**
(45) Veröffentlichungstag und Bekanntmachung des Hinweises auf die Patenterteilung: **24.10.2018**
(21) Anmeldenummer: 14002445.6
(22) Anmeldetag: 16.07.2014
(51) Int. Cl.: B61D 17/22, B60D 5/00

(54) **Übergang zwischen zwei gelenkig miteinander verbundenen Fahrzeugen**
Connection between two articulated vehicles
Passage entre deux véhicules articulés

(43) Veröffentlichungstag der Anmeldung: 20.01.2016
(73) Patentinhaber: Hübner GmbH & Co. KG, 34123 Kassel (DE)
(72) Erfinder: Volker Jünke, 34123 Kassel (DE)
(74) Vertreter: Patentanwälte Walther Hinz Bayer PartGmbB

(56) Entgegenhaltungen:
- EP-A1- 0 558 777
- EP-A1- 2 172 383
- EP-A1- 2 418 107
- DE-U1- 29 921 498
- FR-A1- 2 865 984
- US-A- 903 893

## Beschreibung

Die vorliegende Erfindung betrifft einen Übergang zwischen zwei gelenkig miteinander verbundenen Fahrzeugen, wobei der Übergang mindestens zwei ineinander gelagerte Bälge mit jeweils einer Mehrzahl von Balgelementen umfasst.

Übergänge, insbesondere zwischen Fahrzeugen eines Schienenfahrzeuges sind aus dem Stand der Technik hinreichend bekannt. Die Übergänge umfassen hierbei üblicherweise mindestens einen Balg, der eine Plattform oder eine Brücke überspannt, um Personen das Hinüberwechseln von einem Fahrzeug zum anderen Fahrzeug zu ermöglichen. Bekannt sind in diesem Zusammenhang auch sogenannte Doppelwellen-Bälge, d. h. zwei ineinander gelagerte Bälge, die insbesondere einen erhöhten Schallschutz bieten. Dies ist insbesondere relevant bei schnellfahrenden Zügen, wie beispielsweise dem ICE oder auch den TGV. Die Übergänge bei solchen Zügen sind häufig in Bezug auf ihre lichte Durchgangsweite begrenzt. D. h., dass es nicht unproblematisch ist, mit einem Rollstuhl von einem Fahrzeug zum anderen Fahrzeug hinüberzuwechseln. Problematisch ist ebenfalls, dass zwischen den einzelnen Fahrzeugen Nick-, Wank-, Knick- und auch Versatzbewegungen zugelassen werden müssen, wie sie beispielsweise auftreten, wenn ein solches Fahrzeug über eine Weiche fährt. D. h., dass der Balg durchaus in der Lage sein muss eine erhebliche Dehnfähigkeit bereitzustellen, um eben solche Bewegungen zuzulassen. Dies gilt vom Grundsatz her auch bei Fahrzeugen mit Jakobsdrehgestellen.

Aus der US 903,893 ist ein Balg bekannt, wobei die Balgelemente doppelwandig ausgebildet sind. Ein solchermaßen ausgebildeter doppelwandiger Balg ist mithilfe einer Befestigungsvorrichtung an der jeweiligen Stirnseite des Fahrzeugteils befestigt.

Aus der EP 0 558 777 A1 ist ein Faltenbalg für eine Übergangseinrichtung eines Eisenbahnwaggons bekannt, der ebenfalls doppelwandig ausgebildet ist, wobei die beiden Wandungen der Balgelemente endseitig jeweils durch Rahmen miteinander bzw. durch Befestigungsrahmen am jeweiligen Fahrzeugteil angelenkt sind.

Aus der gattungsbildenden FR 2 865 984 A1 ist ein Balg eines Gelenkfahrzeugs bekannt, wobei auf der Unterseite des Balges ein Boden angeordnet ist, der schlussendlich von dem Balg zur Bildung eines Überganges umspannt wird.

Zusammengefasst bedeutet dies, dass ein Balg eines Übergangs bereitgestellt werden soll, der in der Lage ist sämtlichen Fahrbewegungen, wie sie zwischen zwei gelenkig miteinander verbundenen Fahrzeugteilen auftreten, nachzugeben, und der dennoch eine erhöhte lichte Durchgangsweite bereitstellen soll, insbesondere auch vor dem Hintergrund, dass die Möglichkeit für Rollstuhlfahrer besteht, von dem einen Fahrzeug in das andere Fahrzeug hinüberzuwechseln.

Zur Lösung der Aufgabe wird erfindungsgemäß vorgeschlagen, dass die Balgelemente des äußeren Balges in der neutralen Stellung des Übergangs, d. h. Fahrzeuge, in die Balgelemente des inneren Balges hineinragen. D. h., dass insbesondere die Balgelemente des äußeren Balges in den Balgelementen des inneren Balges lagern. Oder anders ausgedrückt bedeutet dies, dass die einzelnen Balgelemente des äußeren Balges mit den Balgelementen des inneren Balges verschachtelt sind. Das hat aber auch zur Folge, dass bei einer Tiefe der Balgelemente beider Bälge von etwa 75-80 mm in ihrer Gesamtheit der äußere Balg, da er einen größeren Abstand zur Längsachse des Übergangs aufweist, eine höhere Auszugsweite bzw. Dehnfähigkeit bereitstellt, als der innere Balg. D. h. die Tiefe der einzelnen Balgelemente des inneren und des äußeren Balges sind durchaus unterschiedlich, und zwar dergestalt, dass die Tiefe der Balgelemente des inneren Balges geringer ist, als die Tiefe der Balgelemente des äußeren Balges, die, wie bereits ausgeführt, in die Balgelemente des inneren Balges zungenförmig hineinragen. D. h., dass man durch diese Konstruktion eine Balgkonstruktion mit zwei Bälgen erhält, die einerseits eine erhöhte Schalldämmung bereitstellt, wie dies von üblichen Doppelwellen-Bälgen an sich bekannt ist, aber darüber hinaus und dies im Gegensatz zu den üblichen Doppelwellen-Bälgen, insgesamt nur eine geringe Tiefe aufweisen, im vorliegenden Fall eine Tiefe über die Balgelemente beider Bälge von maximal 80 mm. Dies ermöglicht eine lichte Durchgangsbreite des Übergangs, der es auch Rollstuhlfahrern erlaubt, zwischen den Fahrzeugen hinüberzuwechseln. Hierbei ist erfindungsgemäß vorgesehen, dass jeder Balg durch einen eigenen Balgrahmen mit dem Fahrzeug verbindbar ist. Das bedeutet nicht, dass notwendigerweise der Balgrahmen eines jeden Balges gesondert mit dem Fahrzeug verbunden ist, vielmehr besteht die Möglichkeit den inneren Balgrahmen des inneren Balges mit dem äußeren Balgrahmen des äußeren Balges durch einen Klemmrahmen zu verbinden. D. h., es ist lediglich ein einziger Anbindungspunkt am Fahrzeug, bzw. Wagenkasten des Fahrzeugs erforderlich, um den Balg des Übergangs in Gänze mit dem Fahrzeug zu verbinden.

Vorteilhafte Merkmale und Ausgestaltungen der Erfindung ergeben sich aus den Unteransprüchen.

So ist insbesondere vorgesehen, dass der innere Balg als Negativbalg ausgebildet ist, was optisch bewirkt, dass von der Innenseite her der Balg im neutralen Zustand optisch eine im Wesentlichen in sich geschlossene Einheit darstellt.

Der äußere Balg ist ebenfalls als Negativbalg ausgebildet, da sich ansonsten nicht die Möglichkeit eröffnen würde, die Balgelemente der einzelnen Bälge ineinander zu lagern, d. h. ineinander zu verschachteln.

Als besonders vorteilhaft hat sich herausgestellt, wenn, worauf bereits hingewiesen wurde, der innere Balg im Querschnitt etwa rechteckförmige Balgelemente aufweist. Dies vor dem Hintergrund, dass dann optisch vom Durchgang her, d. h. von der Mittellängsachse des Übergangs, der Balg eine im Wesentlichen in sich geschlossene Wand bildet. Der äußere Balg hingegen weist im Querschnitt gewölbte Balgelemente auf, sodass die Möglichkeit besteht, dass die Balgelemente des äußeren Balges tatsächlich zungenförmig, wie dies bereits beschrieben wurde, in die Balgelemente des inneren Balges hineinragen können. Eine rechteckige Querschnittsform der Balgelemente des inneren Balges ist hierbei insofern von Vorteil, als durch die Rechteckform Raum bereitgestellt wird für die gewölbten Balgelemente des äußeren Balges, sodass diese bei Bewegung im Wesentlichen ohne Verschleiß in den im Querschnitt rechteckförmigen Balgelementen des inneren Balges lagern können.

Nach einem besonders vorteilhaften Merkmal der Erfindung ist vorgesehen, dass der äußere und der innere Balg im Bereich ihrer Balgrahmenleisten miteinander in Verbindung stehen. Es wurde bereits mehrfach darauf hingewiesen, dass die Balgelemente des äußeren Balges in den Balgelementen des inneren Balges ruhen. Es wurde bereits ebenfalls darauf hingewiesen, dass die Bälge den unterschiedlichsten Bewegungsformen ausgesetzt sind, als da sind Wank-, Nick-, Knick- und auch Versatzbewegungen. In jedem Fall muss immer sichergestellt sein, dass die Balgelemente des äußeren Balges in den Balgelementen des inneren Balges verbleiben, da ansonsten mit einem erhöhten Verschleiß der Bälge zu rechnen ist. Dadurch, dass nunmehr vorgesehen ist, dass die Bälge im Bereich ihrer Balgrahmenleisten miteinander in Verbindung stehen, wird erreicht, dass die einzelnen Balgelemente sowohl des inneren als auch des äußeren Balges geführt sind. Die Balgrahmenleisten sind hierbei Querschnitt rechteckig ausgebildet und erfassen die Balgelemente klammerartig. Sie umgeben den Balg tunnelförmig.

Hierzu ist nach einer Variante vorgesehen, dass die Verbindung zwischen den Balgrahmenleisten der beiden Bälge flexibel ist. In diesem Zusammenhang ist darauf hinzuweisen, dass die einzelnen Balgelemente eines Balges durch die Balgrahmenleisten, die sich im Querschnitt im Wesentlichen als U-förmige, um den Balg umlaufende Profile darstellen, verbunden sind. Hierbei kann nach einer Ausführungsform der innere Balg Balgrahmenleisten aufweisen, die eine pfeilförmige Lasche aufweisen, wobei die pfeilförmige Lasche in den Bereich zwischen zwei Balgelementen des äußeren Balges hineinragt. Die Balgrahmenleisten sind, wie bereits ausgeführt, im Querschnitt etwa U-förmig ausgebildet und erfassen jeweils zwei Balgelemente umlaufend. D. h., dass sich die pfeilförmige Lasche im Zwischenraum zwischen den beiden Balgelementen selbstständig zentriert, und insofern dafür gesorgt ist, dass die Lagerung der Balgelemente des äußeren Balges in den Balgelementen des inneren Balges immer gewährleistet ist.

Eine andere Variante zeichnet sich dadurch aus, dass die Balgrahmenleiste des inneren Balges eine Steglasche aufweist, wobei die Steglasche durch die Balgrahmenleiste des äußeren Balges erfasst ist. D. h., dass die Steglasche genauso von der Balgrahmenleiste erfasst wird, wie die Balgelemente selbst. Die Steglasche kann hierbei aus einem elastischen Material ausgebildet sein, sodass eine gewisse Flexibilität zwischen dem inneren und dem äußeren Balg vorhanden ist.

Anhand der Zeichnungen wird die Erfindung nachstehend beispielhaft näher erläutert.
- Fig. 1: zeigt hierbei schematisch einen Übergang zwischen zwei gelenkig miteinander verbundenen Fahrzeugen;
- Fig. 2: zeigt schematisch im Querschnitt die Anbindung der beiden Bälge an dem einen Fahrzeug;
- Fig. 3a: zeigt die Verbindung zwischen den Balgrahmenleisten des inneren Balges mit den Balgrahmenleisten des äußeren Balges in einer ersten Ausführungsform
- Fig. 3b: zeigt eine Verbindung gemäß Figur 3a in einer zweiten Ausführungsform.

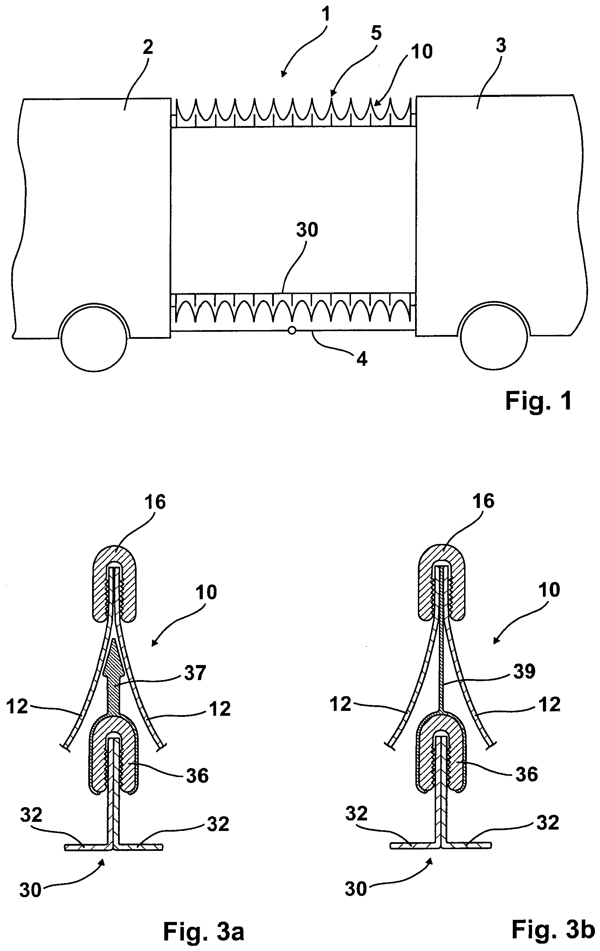

Wie sich unmittelbar aus Figur 1 ergibt, umfasst das mit 1 bezeichnete Fahrzeug, das insbesondere als Schienenfahrzeug ausgebildet ist, zwei Fahrzeuge 2, 3, die durch eine gelenkige Verbindung 4 miteinander in Verbindung stehen. Im Bereich der gelenkigen Verbindung 4 befindet sich der Übergang 5 mit dem äußeren Balg 10 und dem inneren Balg 30. Die Brücke des Übergangs, die das Hinüberwechseln von Personen zwischen den beiden Fahrzeugen 2 und 3 ermöglichen soll, ist aus Gründen der Übersichtlichkeit nicht dargestellt.

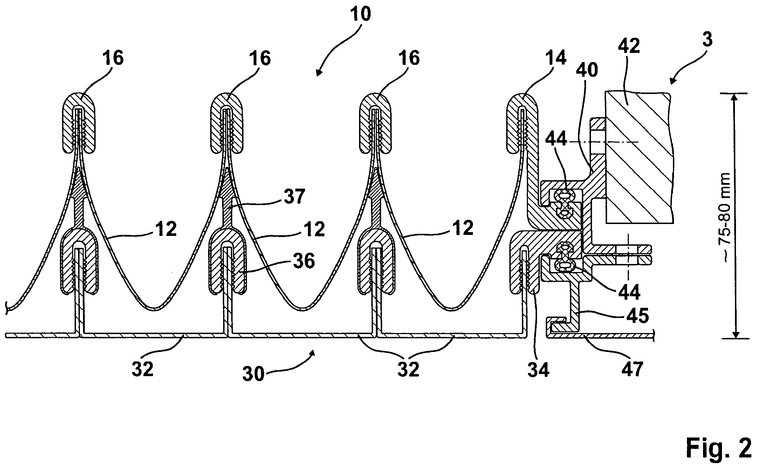

Der äußere Balg 10 weist einzelne Balgelemente 12 auf, die gewölbt ausgebildet sind, wie sich dies ebenfalls in Anschauung von Figur 2 ergibt.

Der innere Balg 30 hingegen zeigt Balgelemente 32, die im Querschnitt in etwa rechteckförmig ausgebildet sind. Wesentlich ist, dass sich die Balgelemente 12 des äußeren Balges 10 bis in die Balgelemente 32 des inneren Balges 30 erstrecken, d. h., dass die Balgelemente 12 des äußeren Balges in den Balgelementen 32 des inneren Balges lagern. Das bedeutet aber auch, dass die Tiefe der Balgelemente 12 des äußeren Balges größer ist, als die Tiefe der Balgelemente 32 des inneren Balges, sodass die Balgelemente 12 des äußeren Balges in der Lage sind, größeren Verformungen nachzugeben, als dies bei den Balgelementen 32 des inneren Balges der Fall ist. Insgesamt ist vorgesehen, dass die Tiefe der beiden Bälge insgesamt ca. 75-80 mm beträgt. Dies hat unmittelbar zur Folge, dass die lichte Durchgangsweite des Balges als solchem verhältnismäßig groß ist.

Für die Anbindung der Balgelemente 12 des äußeren Balges 10 ist ein äußerer Balgrahmen 14 vorgesehen, der endseitig das letzte Balgelement 12 des äußeren Balges klemmend erfasst. Das letzte Balgelement 32 des inneren Balges 30 wird durch einen inneren Balgrahmen 34 klemmend erfasst, wie sich dies in Anschauung von Figur 2 ergibt. Die beiden Balgrahmen, nämlich der äußere Balgrahmen 14 und der innere Balgrahmen 34 werden durch einen zweiteiligen Klemmrahmen 40 erfasst, wobei der Klemmrahmen 40 mit dem Wagenkasten 42 beispielsweise des Fahrzeugs 3 in Verbindung steht. Der äußere Balgrahmen 14 und der innere Balgrahmen 34 sind hierbei gegenüber dem Klemmrahmen 40 durch Dichtungen 44 gegen Wassereintritt abgedichtet. Zur Verklemmung der beiden Balgrahmen, nämlich dem äußeren Balgrahmen 14 und dem inneren Balgrahmen 34 weist der Klemmrahmen 40 den Halterahmen 45 auf, wobei der Halterahmen 45 auch der Aufnahme der Innenverkleidung 47 dient.

Es wurde bereits darauf hingewiesen, dass der innere Balg mit dem äußeren Balg im Bereich der im Querschnitt U-förmigen Balgrahmenleiste 16,36 in Verbindung steht. Bei der Ausführungsform gemäß Figur 3a ist vorgesehen, dass die Balgelemente 32 des inneren Balges 30 durch eine Balgrahmenleiste 36 erfasst sind, wobei die Balgrahmenleiste eine pfeilförmige Lasche 37 aufweist, die in den Zwischenraum zwischen zwei Balgelementen 12 des äußeren Balges eingreift, wobei die Balgelemente 12 durch die Balgrahmenleiste 16 gehalten sind. Die Balgrahmenleiste 16 ist im Querschnitt U-förmig ausgebildet und erfasst die Balgelemente 12 des äußeren Balges 10 umlaufend. Dies gilt in gleicher Weise für den inneren Balg 30. Wesentlich hierbei ist, dass die beiden Bälge 10, 30 durch diese pfeilförmigen Laschen 37 geführt sind. Die Führung ist hierbei derart, dass es sich hierbei um eine bewegliche, d. h. flexible Verbindung handelt, die den beiden Bälgen die Freiheitsgrade gibt, die sie benötigen, um im Wesentlichen verschleißfrei miteinander in Verbindung stehen zu können, egal welche Bewegung die Bälge ausführen.

Betrachtet man nunmehr die Ausführungsform gemäß Figur 3b so ist eine Steglasche 39 vorgesehen, wobei die Steglasche 39 Teil der Balgrahmenleiste 36 ist, die die Balgelemente 32 des inneren Balges umlaufend und klemmend erfasst, wie dies bereits beschrieben worden ist. Die Steglasche 39 wird hierbei durch die Balgrahmenleiste 16 des äußeren Balges 10 in gleicher Weise erfasst, wie die Balgelemente 12, wie sich dies unmittelbar in Anschauung von Figur 3b ergibt. Die Steglasche 39 kann hierbei aus flexiblen Material beispielsweise in einem Elastomer sein, sodass auch eine Einschränkung der Bewegungsfreiheit der Bälge zueinander durch die Steglasche im Wesentlichen nicht stattfindet, die Bälge sich aber dennoch gegenseitig führen. D. h. die Balgkonstruktion mit den beiden Bälgen als solche kann im Wesentlichen allen Fahrbewegungen folgen, ohne dass ein übermäßiger Verschleiß stattfindet, da die Balgelemente des äußeren Balges in den Balgelementen des inneren Balges lagern.

### Bezugszeichenliste:

- 1: Fahrzeug
- 2, 3: Fahrzeugteile
- 4: gelenkige Verbindung
- 5: Übergang
- 10: äußerer Balg
- 12: Balgelement
- 14: äußerer Balgrahmen
- 16: Balgrahmenleiste
- 30: innerer Balg
- 32: Balgelement
- 34: innerer Balgrahmen
- 36: Balgrahmenleiste
- 37: pfeilförmige Lasche
- 39: Steglasche
- 40: Klemmrahmen
- 42: Wagenkasten
- 44: Dichtung
- 45: Halterahmen
- 47: Innenverkleidung

## Patentansprüche

1. Übergang (5) zwischen zwei gelenkig miteinander verbundenen Fahrzeugen (2,3), wobei der Übergang (5) mindestens zwei ineinander gelagerte Bälge (10,30) mit einer Mehrzahl von Balgelementen (12,32) umfasst,
**dadurch gekennzeichnet,**
**dass** die Balgelemente (12) des äußeren Balges (10) in der neutralen Stellung des Übergangs (5) in die Balgelemente des inneren Balges (30) hineinragen, wobei jeder Balg (10,30) durch einen eigenen Balgrahmen (14,34) mit dem Fahrzeug (2,3) verbindbar ist.

2. Übergang (5) zwischen zwei gelenkig miteinander verbundenen Fahrzeugen (2,3) nach Anspruch 1,
**dadurch gekennzeichnet,**
**dass** der innere Balg (30) als Negativbalg ausgebildet ist.

3. Übergang (5) zwischen zwei gelenkig miteinander verbundenen Fahrzeugen (2,3) nach Anspruch 1 oder 2,
**dadurch gekennzeichnet,**
**dass** der äußere Balg (10) als Negativbalg ausgebildet ist.

4. Übergang (5) zwischen zwei gelenkig miteinander verbundenen Fahrzeugen (2,3) nach einem der voranstehenden Ansprüche, **dadurch gekennzeichnet,**
**dass** die beiden Balgrahmen (14,34) eine Einheit bilden und mit dem Fahrzeug (2,3) verbindbar sind.

5. Übergang (5) zwischen zwei gelenkig miteinander verbundenen Fahrzeugen (2,3) nach einem der voranstehenden Ansprüche, **dadurch gekennzeichnet,**
**dass** der innere Balg (30) im Querschnitt in etwa rechteckförmige Balgelemente (32) aufweist.

6. Übergang (5) zwischen zwei gelenkig miteinander verbundenen Fahrzeugen (2,3) nach einem der voranstehenden Ansprüche, **dadurch gekennzeichnet,**
**dass** der äußere Balg (10) im Querschnitt gewölbte Balgelemente (12) aufweist.

7. Übergang (5) zwischen zwei gelenkig miteinander verbundenen Fahrzeugen (2,3) nach einem der voranstehenden Ansprüche, **dadurch gekennzeichnet,**
**dass** der äußere (10) und der innere Balg (30) im Bereich ihrer Balgrahmenleisten (16,36) miteinander in Verbindung stehen.

8. Übergang (5) zwischen zwei gelenkig miteinander verbundenen Fahrzeugen (2,3) nach Anspruch 7,
**dadurch gekennzeichnet,**
**dass** die Verbindung zwischen den Balgrahmenleisten (16,36) der beiden Bälge (10,30) flexibel ist.

9. Übergang (5) zwischen zwei gelenkig miteinander verbundenen Fahrzeugen (2,3) nach Anspruch 7 oder 8,
**dadurch gekennzeichnet,**
**dass** zur Verbindung der beiden Bälge (10,30) die Balgrahmenleisten (16,36) durch eine Lasche (37,39) verbunden sind.

10. Übergang (5) zwischen zwei gelenkig miteinander verbundenen Fahrzeugen (2,3) nach Anspruch 8 oder 9,
**dadurch gekennzeichnet,**
**dass** die flexible Verbindung als bewegliche Verbindung ausgebildet ist.

11. Übergang (5) zwischen zwei gelenkig miteinander verbundenen Fahrzeugen (2,3) nach Anspruch 10,
**dadurch gekennzeichnet,**
**dass** die bewegliche Verbindung eine pfeilförmige Lasche (37) umfasst, die in den Zwischenraum zwischen zwei Balgelementen (12) ragt.

12. Übergang (5) zwischen zwei gelenkig miteinander verbundenen Fahrzeugen (2,3) nach einem der Ansprüche 7 bis 10,
**dadurch gekennzeichnet,**
**dass** die Verbindung eine Steglasche (39) umfasst, die Teil der Balgrahmenleiste (36) ist, und die von der Balgrahmenleiste (16) erfassbar ist.

## Claims

1. Connection (5) between two articulated vehicles (2, 3), wherein the connection (5) comprises at least two bellows (10, 30) mounted one inside the other with a plurality of bellows elements (12, 32),
**characterised in**
**that** the bellows elements (12) of the outer bellows (10) in the neutral position of the connection (5) protrude into the bellows elements of the inner bellows (30), wherein each bellows (10, 30) can be connected with the vehicle (2, 3) by an own bellows frame (14, 34).

2. Connection (5) between two articulated vehicles (2, 3) according to claim 1,
**characterised in**
**that** the inner bellows (30) is formed as a negative bellows.

3. Connection (5) between two articulated vehicles (2, 3) according to claim 1 or 2,
**characterised in**
**that** the outer bellows (10) is formed as a negative bellows.

4. Connection (5) between two articulated vehicles (2, 3) according to any one of the preceding claims,
**characterised in**
**that** the two bellows frames (14, 34) form a unit and can be connected with the vehicle (2, 3).

5. Connection (5) between two articulated vehicles (2, 3) according to any one of the preceding claims,
**characterised in**
**that** the inner bellows (30) in cross-section has approximately rectangular bellows elements (32).

6. Connection (5) between two articulated vehicles (2, 3) according to any one of the preceding claims,
**characterised in**
**that** the outer bellows (10) in cross-section has curved bellows elements (12).

7. Connection (5) between two articulated vehicles (2, 3) according to any one of the preceding claims,
**characterised in**
**that** the outer (10) and the inner bellows (30) in the area of their bellows frame ledges (16, 36) are connected with each other.

8. Connection (5) between two articulated vehicles (2, 3) according to claim 7,
**characterised in**
**that** the connection between the bellows frame ledges (16, 36) of the two bellows (10, 30) is flexible.

9. Connection (5) between two articulated vehicles (2, 3) according to claim 7 or 8,
**characterised in**
**that** for connection of the two bellows (10, 30) the bellows frame ledges (16, 36) are connected by means of a strap (37, 39).

10. Connection (5) between two articulated vehicles (2, 3) according to claim 8 or 9,
**characterised in**
**that** the flexible connection is formed as a movable connection.

11. Connection (5) between two articulated vehicles (2, 3) according to claim 10,
**characterised in**
**that** the movable connection comprises an arrow-shaped strap (37) protruding into the gap between two bellows elements (12).

12. Connection (5) between two articulated vehicles (2, 3) according to any one of claims 7 to 10,
**characterised in**
**that** the connection comprises a web lug (39), which is part of the bellows frame ledge (36), and which can be grasped by the bellows frame ledge (16).

## Revendications

1. Passage (5) entre deux véhicules (2, 3) articulés, le passage (5) comportant au moins deux soufflets (10, 30) logés l'un dans l'autre avec une pluralité d'éléments de soufflet (12, 32),
**caractérisé en ce**
**que** les éléments de soufflet (12) du soufflet extérieur (10) dans la position neutre du passage (5) font saillie aux éléments de soufflet du soufflet intérieur (30), chaque soufflet (10, 30) étant connectable avec le véhicule (2, 3) par son propre cadre de soufflet (14, 34).

2. Passage (5) entre deux véhicules (2, 3) articulés selon la revendication 1,
**caractérisé en ce**
**que** le soufflet intérieur (30) est formé en tant que soufflet négatif.

3. Passage (5) entre deux véhicules (2, 3) articulés selon la revendication 1 ou 2,
**caractérisé en ce**
**que** le soufflet extérieur (10) est formé en tant que soufflet négatif.

4. Passage (5) entre deux véhicules (2, 3) articulés selon l'une quelconque des revendications précédentes,
**caractérisé en ce**
**que** les deux cadres de soufflet (14, 34) forment une unité et sont connectables au véhicule (2, 3).

5. Passage (5) entre deux véhicules (2, 3) articulés selon l'une quelconque des revendications précédentes,
**caractérisé en ce**
**que** le soufflet intérieur (30) en section transversale comprend des éléments de soufflet (32) dans une forme sensiblement rectangulaire.

6. Passage (5) entre deux véhicules (2, 3) articulés selon l'une quelconque des revendications précédentes,
que le soufflet extérieur (10) en section transversale comprend des éléments de soufflet (32) courbés.

7. Passage (5) entre deux véhicules (2, 3) articulés selon l'une quelconque des revendications précédentes,
**caractérisé en ce**
**que** le soufflet extérieur (10) et le soufflet intérieur (30) dans la région de leurs baguettes de cadre de soufflet (16, 36) sont liés entre eux.

8. Passage (5) entre deux véhicules (2, 3) articulés selon la revendication 7,
**caractérisé en ce**
**que** la liaison entre les baguettes de cadre de soufflet (16, 36) des deux soufflets (10, 30) est flexible.

9. Passage (5) entre deux véhicules (2, 3) articulés selon la revendication 7 ou 8,
**caractérisé en ce**
**que** pour la liaison des deux soufflets (10, 30) les baguettes de cadre de soufflet (16, 36) sont liés par une languette (37, 39).

10. Passage (5) entre deux véhicules (2, 3) articulés selon la revendication 8 ou 9,
**caractérisé en ce**
**que** la liaison flexible est formé en tant que liaison mobile.

11. Passage (5) entre deux véhicules (2, 3) articulés selon la revendication 10,
**caractérisé en ce**
la liaison mobile comprend une languette en forme de flèche (37) faisant saillie dans l'espace entre deux éléments de soufflet (12).

12. Passage (5) entre deux véhicules (2, 3) articulés selon l'une quelconque des revendications 7 à 10,
**caractérisé en ce**
**que** la liaison comprend une languette de nervure (39) qui est une partie de la baguette de cadre de soufflet (36) et qui peut être saisie par la baguette de cadre de soufflet (16).
